# FASCICULE DE BREVET EUROPEEN

(11) **EP 2 006 202 B1**
(45) Date de publication et mention de la délivrance du brevet: **03.02.2010**
(21) Numéro de dépôt: 08010418.5
(22) Date de dépôt: 09.06.2008
(51) Int. Cl.: B64D 43/00

(54) **Procédé et dispositif de contrôle et de régulation d'un turbomoteur de giravion**
Verfahren und Vorrichtung zur Kontrolle und Regulierung eines Triebwerks eines Drehflügelflugzeugs
Method and device for testing and regulating a turboshaft engine of a rotorcraft

(30) Priorité: 20.06.2007 FR 0704399
(43) Date de publication de la demande: 24.12.2008
(73) Titulaire: EUROCOPTER, 13725 Marignane Cédex (FR)
(72) Inventeur: Iraudo, Lionel, 13007 Marseille (FR)
(74) Mandataire: GPI & Associés

(56) Documents cités:
- EP-A- 0 286 120
- DE-C1- 4 125 372
- FR-A- 2 356 210
- US-A- 3 931 619
- US-A- 4 619 110
- US-A- 4 787 053

## Description

La présente invention concerne un procédé et un dispositif de contrôle et de régulation d'un turbomoteur de giravion, plus particulièrement d'un hélicoptère.

Les giravions sont généralement pourvus d'au moins un turbomoteur à turbine libre. La puissance est alors prélevée sur un étage basse pression de chaque turbine libre qui tourne entre 20 000 et 50 000 tours par minute,

Par suite, une boîte de réduction de vitesse est nécessaire pour lier les turbines libres au rotor principal d'avancement et de sustentation puisque la vitesse de rotation de ce rotor est sensiblement comprise entre 200 et 400 tours par minute: il s'agit de la boîte de transmission principale.

Les limitations thermiques des turbomoteurs et les limitations en couple de la botte de transmission principale permettent de définir trois régimes normaux d'utilisation des turbomoteurs:
- le régime de décollage, utilisable pendant cinq à dix minutes, correspondant à un niveau de couple pour la boîte de transmission et un échauffement de chaque turbomoteur admissibles pendant un temps limité sans dégradation notable : c'est la puissance maximale au décollage (PMD),
- le régime maximal continu pendant lequel, à aucun moment, ne sont dépassées ni les possibllités de la boîte de transmission principale, ni celles résultant de l'échauffement maximal admissible en continu devant les aubages à haute pression du premier étage de chaque turbine libre: c'est la puissance maximale en continu (PMC),
- le régime maximal en transitoire, buté par la régulation : on parle alors de puissance maximale en transitoire (PMT).

Le motoriste détermine alors des limitations de chaque turbomoteur permettant d'obtenir une puissance minimale pour chaque régime précité et une durée de vie acceptable, la puissance minimale correspondant notamment à la puissance développée par un turbomoteur vieilli à savoir un turbomoteur ayant atteint sa durée d'utilisation maximale préconisée.

Ces limites sont généralement surveillées par l'intermédiaire de trois paramètres de surveillance du turbomoteur : la vitesse de rotation du générateur de gaz du turbomoteur, le couple moteur et la température d'éjection des gaz à l'entrée de la turbine libre du turbomoteur respectivement dénommés Ng, Cm et T45 par l'homme du métier,

Par ailleurs, les turbomoteurs de dernières générations sont contrôlés et régulés par un dispositif de contrôle et de régulation muni d'un calculateur électronique de régulation, dénommé FADEC par l'homme du métier, qui détermine notamment la position du doseur carburant en fonction d'une part d'une boucle de régulation comportant une boucle primaire basée sur le maintien de la vitesse de rotation du rotor du giravion, et d'autre part d'une boucle secondaire basée sur une valeur de consigne du paramètre de pilotage.

Un FADEC reçoit de plus des signaux relatifs d'une part aux paramètres de surveillance du turbomoteur qu'il commande, et, d'autre part à des paramètres de surveillance d'organes importants du giravion tels que la vitesse de rotation du rotor principal d'avancement et de sustentation par exemple.

Le FADEC transmet alors les valeurs des paramètres de surveillance à un système d'affichage du dispositif de contrôle et de régulation, agencé dans le cockpit du giravion, via une liaison numérique,

En référence au document FR2749545, le système d'affichage peut comporter un instrument de première limitation qui identifie et affiche un paramètre limitant, à savoir le paramètre de surveillance le plus proche de sa limite.

On note que le FADEC peut éventuellement déterminer ce paramètre limitant, l'instrument de première limitation se contentant alors de l'affichage.

Enfin, le FADEC est à même de déclencher une pluralité d'alarmes si des incidents se produisent, une panne mineure ou totale de la régulation carburant du turbomoteur par exemple.

De plus, le FADEC envoie au système d'affichage des informations via une liaison numérique lorsqu'un paramètre de surveillance du turbomoteur dépasse une limite prédéterminée par le motoriste,

Par suite, le dispositif de contrôle et de régulation comporte un système d'affichage, dénommé parfois « système avionique », et un calculateur électronique de régulation, le calculateur électronique de régulation assurant à la fois la régulation du turbomoteur mais aussi la transmission d'informations via une liaison numérique vers le système d'affichage pour le pilotage et la surveillance de paramètres du turbomoteur.

En outre, pour des raisons de sécurité et afin d'atteindre un taux d'occurrence de pannes conforme aux exigences aéronautiques, le dispositif de contrôle et de régulation est de plus pourvu de capteurs reliés via des liaisons de secours analogiques à des instruments de secours qui affichent par exemple la vitesse de rotation du générateur de gaz du turbomoteur, le couple moteur, la température d'éjection des gaz à l'entrée de la turbine libre du turbomoteur ou encore la vitesse de rotation de cette turbine libre.

Ainsi, une panne de la liaison numérique du FADEC ou du système d'affichage est compensée par une liaison analogique de secours et des instruments de secours.

Toutefois, cette architecture connue du dispositif de contrôle et de régulation met en oeuvre d'une part un FADEC relié par une liaison numérique à un système d'affichage, et d'autre part, une pluralité de capteurs reliés à des instruments de secours via des liaisons analogiques. On comprend aisément que cette architecture est particulièrement lourde à implémenter car il est nécessaire de prévoir le cheminement de nombreux câblages analogiques Jusqu'au cockpit.

De plus, ce dernier doit présenter un espace suffisamment important pour accueillir certains instruments de secours de chaque turbomoteur.

Enfin, l'importance et le nombre de câblages analogiques a un coût non négligeable en terme de masse, la distance séparant les turbomoteurs du cockpit du giravion étant souvent importante.

Par ailleurs, on note que le document FR 2 356210 décrit un système d'affichage qui utilise ces valeurs pour effectuer plusieurs comparaisons afin de déterminer si lesdites valeurs satisfont à des critères prédéterminée d'acceptation.

En outre, le document US 4 787 053 décrit un système de surveillance et d'enregistrement d'un turbomoteur muni d'un thermocouple qui envoie un signal vers une unité de traitement apte à amplifier ce signal et à l'envoyer vers une alarme en cas de sur-température.

Enfin, le document EP 0 286 210 décrit un indicateur muni d'un moyen de sélection d'une pluralité d'informations, incluant la température d'un moteur, et d'un moyen de calcul déterminant la valeur de ladite information.

La présente invention a pour objet de proposer un procédé et un dispositif de contrôle et de régulation d'un turbomoteur de giravion qui permet de s'affranchir des limitations mentionnées ci-dessus en ne nécessitant pas l'implémentation d'instruments de secours reliés par des liaisons analogiques de secours à des capteurs, dédiés ou non, du turbomoteur.

Selon l'invention, un dispositif de contrôle et de régulation d'un turbomoteur de giravion est muni d'un calculateur électronique de contrôle et de régulation qui reçoit des signaux relatifs à des paramètres de surveillance d'un turbomoteur du giravion. Ce dispositif de contrôle et de régulation est remarquable en ce qu'il est muni d'un moyen d'alarme commandé par le calculateur électronique, via une liaison analogique, lorsqu'un événement susceptible de dégrader la sécurité dudit giravion survient ou encore lorsqu'une action de maintenance du turbomoteur doit être entreprise.

Ainsi, en fonction des signaux qu'il reçoit, relatifs à la vitesse de rotation du générateur de gaz du turbomoteur, au couple moteur et à la température d'éjection des gaz à l'entrée de la turbine libre du turbomoteur ou encore à des compteurs de gestion de composants à vie limitée du turbomoteur, le calculateur électronique active le moyen d'alarme à l'aide d'une liaison analogique.

Via cette liaison analogique particulièrement sûre, le calculateur électronique et le moyen d'alarme vont pouvoir sécuriser la détection d'événements pouvant compromettre la fiabilité ou la sécurité du turbomoteur et donc éviter qu'un événement catastrophique survienne ce qui rend inutile l'utilisation d'instruments de secours.

Avantageusement, le moyen d'alarme est un moyen visuel agencé dans le cockpit du giravion, une lampe par exemple. Néanmoins, le moyen d'alarme peut aussi consister en un moyen sonore.

Par ailleurs, selon une variante, il est envisageable que le dispositif de contrôle et de régulation comporte au moins un système d'affichage qui reçoit notamment des informations relatives aux paramètres de surveillance pour afficher la valeur d'un paramètre limitant par exemple. Le système d'affichage est alors relié au calculateur via une première et une deuxième liaisons numériques.

La redondance des liaisons numériques réduit considérablement le taux d'occurrence de pannes ce qui contribue à la suppression des instruments de secours.

Avantageusement, le moyen d'alarme, relié au calculateur électronique par une liaison analogique indépendante des première et deuxième liaisons numériques, peut alors comporter un voyant intégré dans le système d'affichage.

Cette configuration permet de réduire de manière plus conséquente l'encombrement du cockpit du giravion qui ne nécessite ni des instruments de secours ni une lampe supplémentaire. En effet, le système d'affichage usuel est relié par des liaisons numériques au calculateur électronique et intègre de plus le moyen d'alarme relié à ce calculateur par une seule liaison analogique.

Dans ces conditions, le moyen d'alarme est activé lorsqu'une action de maintenance doit être entreprise sur le turbomoteur. On verra par la suite que le calculateur surveille au moins un compteur de gestion de composants à vie limitée du turbomoteur pour déterminer si des pièces du turbomoteur à durée de vie limitée doivent être changées. Les compteurs de gestion surveillés peuvent comprendre un compteur usuel du nombre de cycles effectués par la turbine haute pression du turbomoteur, un compteur usuel du nombre de cycles effectués par la turbine libre du turbomoteur, un compteur usuel du nombre de cycles effectués par les roues d'injection du turbomoteur, un compteur mesurant l'endommagement du turbomoteur, ou encore un compteur usuel du nombre d'heures de vol effectuées par le turbomoteur.

Il est à noter que jusqu'à présent, le pilote du giravion reportait les cycles précités sur un carnet d'entretien adéquat afin de les comptabiliser pour vérifier si des actions de maintenance devaient être entreprises. Cette tache est désormais dévolue au calculateur électronique qui prévient l'équipage si une action de maintenance doit avoir lieu.

De plus, le moyen d'alarme est de préférence activé lorsque le turbomoteur est utilisé de façon anormale, à savoir en dehors des régimes d'utilisation certifiés.

Par suite, si un paramètre de surveillance du turbomoteur dépasse sa limite ou si un régime d'utilisation du turbomoteur est utilisé abusivement, le calculateur électronique prévient le pilote via le moyen d'alarme.

Ainsi, le dispositif de contrôle et de régulation est particulièrement actif puisqu'il ne se contente pas d'afficher la valeur de paramètres mais surveille ces paramètres et leurs limites pour vérifier que le vol se déroule normalement et qu'aucun incident ne risque de se produire.

Dans ces conditions, l'installation motrice est parfaitement contrôlée et il devient inutile d'implémenter des liaisons de secours reliées à des instruments de secours qui alourdissent considérablement le giravion du fait de la présence de nombreux harnais électriques.

La présente invention a aussi pour objet un procédé de contrôle et de régulation d'un turbomoteur de giravion apte à être mis en oeuvre par un dispositif de contrôle et de régulation d'un turbomoteur de giravion selon l'invention muni d'un calculateur électronique de contrôle et de régulation qui reçoit des signaux relatifs à des paramètres de surveillance d'un turbomoteur dudit giravion.

Selon ce procédé, le dispositif de contrôle et de régulation comportant un moyen d'alarme, le moyen d'alarme est commandé par le calculateur électronique via une liaison analogique lorsqu'un événement pouvant provoquer une dégradation de la sécurité du giravion survient.

Plus précisément, le calculateur électronique surveillant au moins un compteur de gestion de composants à vie limitée du turbomoteur, le calculateur active le moyen d'alarme lorsque ce compteur de gestion atteint un seuil prédéterminé.

Par sécurité, le dispositif comportant un système d'affichage agencé dans un cockpit du giravion, le calculateur électronique envoie un message au système d'affichage via au moins un bus numérique pour que ce système d'affichage indique au pilote que le compteur de gestion a atteint ledit seuil prédéterminé.

De même, le calculateur électronique active avantageusement le moyen d'alarme lorsque le turbomoteur est utilisé de façon anormale, à savoir en dehors des régimes d'utilisation prescrits.

Par sécurité, le dispositif comportant un système d'affichage agencé dans un cockpit du giravion, le calculateur électronique envoie un message au système d'affichage via au moins un bus numérique pour que ce système d'affichage indique au pilote que le turbomoteur est utilisé de façon anormale.

Selon ce procédé, le calculateur électronique reçoit des signaux de type analogique relatifs à des paramètres de surveillance puis effectue un traitement desdits signaux de type analogique relatifs à des paramètres de surveillance afin de déterminer si un événement susceptible de dégrader la sécurité du giravion survient, Durant ledit traitement, le calculateur électronique détermine alors d'une part si ledit compteur de gestion de composants à vie limitée du turbomoteur a atteint un seuil prédéterminé et, d'autre part, si ledit turbomoteur a été utilisé de façon anormale.

Dans l'affirmative, ledit calculateur électronique active ledit moyen d'alarme via une liaison analogique.

Ainsi, le pilote est informé par deux moyens différents qu'une action de maintenance doit être réalisée sur le turbomoteur. Ce dernier est donc parfaitement contrôlé ce qui garantit un fonctionnement optimal.

Par ailleurs, au sol, on procède aux étapes suivantes lors de la mise sous tension du calculateur électronique :
a) le calculateur électronique simule l'activation d'un régime de fonctionnement du turbomoteur, avantageusement le régime de décollage PMD du turbomoteur,
b) le calculateur électronique simule une valeur d'un paramètre de surveillance du turbomoteur, cette valeur étant supérieure à une limite prédéterminée,
c) on vérifie que le système d'affichage, agencé dans le cockpit et relié au calculateur électronique par une liaison numérique, signale que ladite valeur est supérieure à ladite limite, et
d) on vérifie que ledit moyen d'alarme a été activé par le calculateur électronique.

Par suite, le calculateur électronique réalise un test à son démarrage pour vérifier le bon fonctionnement des différents éléments du dispositif de contrôle et de régulation, En cas d'incohérence, le giravion ne sera pas mis en vol.

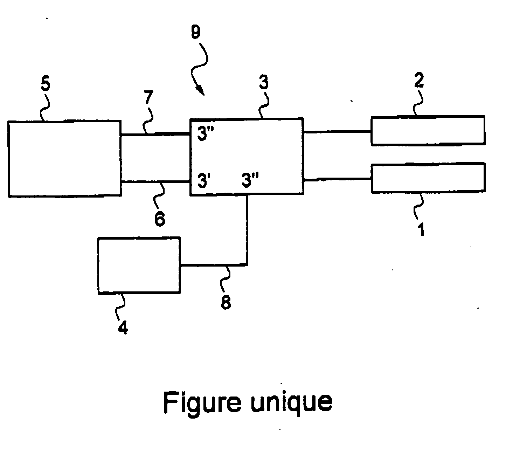

L'invention et ses avantages apparaîtront avec plus de détails dans le cadre de la description qui suit avec un exemple de réalisation donné à titre illustratif en référence à la figure unique annexée.

Cette figure unique représente un schéma descriptif d'un dispositif de contrôle et de régulation 9 d'un turbomoteur de giravion.

Ce dispositif de contrôle et de régulation 9 comporte un calculateur électronique 3 de contrôle et de régulation, un système d'affichage 5 et un moyen d'alarme 4.

Le calculateur électronique 3 reçoit des signaux relatifs au turbomoteur 1 d'un giravion. De même, il reçoit des signaux d'autres organes 2 de ce giravion, un signal représentatif de la vitesse de rotation du rotor d'avancement et de sustentation du giravion par exemple.

A l'aide de ces informations, le calculateur électronique 3 régule le turbomoteur et fournit des informations au système d'affichage 5 qui comprend éventuellement un indicateur de première limitation. Par sécurité, le calculateur électronique 3 possède une première 3' et une deuxième 3" sorties numériques afin de transmettre ces informations au système d'affichage 5 par une première 6 et une deuxième 7 liaisons numériques.

La redondance des liaisons numériques augmente donc la fiabilité du dispositif de contrôle et de régulation, la perte d'une liaison numérique étant compensée par la présence d'une autre liaison numérique.

De plus, si un événement susceptible de dégrader la sécurité du giravion ou d'interdire le vol de ce giravion survient, une interdiction correspondant soit à une interruption du vol en cours soit à l'interdiction proprement de voler et donc de décoller en fonction du moment où se produit l'événement, le calculateur électronique 3 commande le moyen d'alarme 4 via une liaison analogique 8, ladite liaison analogique étant reliée à une sortie analogique 3"' du calculateur électronique 3 et au moyen d'alarme 4.

Cette liaison analogique représente alors une redondance indépendante des première 6 et deuxième 7 liaisons numériques,

Par suite, le dispositif d'alerte, muni de la liaison analogique 8, du moyen d'alarme 4 et du système d'affichage 5 présente une architecture robuste et particulièrement sécurisée.

L'activation du moyen d'alarme 4, un voyant par exemple, par le calculateur électronique 3 permet ainsi d'éviter l'utilisation d'une liaison de secours reliée à des instruments de secours.

Par suite, ce type d'instruments et les liaisons de secours électriques associés n'ont plus lieu d'être avec le dispositif de contrôle et de régulation selon l'invention ce qui garantit un gain de masse non négligeable.

Par ailleurs, le calculateur électronique 3 active le moyen d'alarme 4 via la liaison analogique 8 lorsqu'une action de maintenance doit être réalisée sur le turbomoteur.

En effet, le turbomoteur comporte une pluralité de pièces mécaniques à durée de vie limitée. A l'issue de sa durée de vie, la pièce mécanique concernée doit être remplacée. Par exemple, les nombres de cycles de la turbine haute pression, de la turbine libre et des roues d'injection sont respectivement limités à 15000, 10000 et 8000, l'endommagement étant limité à 100%.

Le calculateur électronique comptabilise alors ces différents cycles, l'endommagement du turbomoteur et le nombre d'heures de vol réalisées par le turbomoteur via des compteurs de gestion.

Si un compteur de gestion d'une pièce du turbomoteur atteint un seuil prédéterminé, soit 15000 par exemple pour le compteur de gestion de la turbine haute pression, alors le calculateur électronique 3 active le moyen d'alarme 4.

Le calculateur électronique 3 n'est donc pas un élément passif mais particulièrement actif puisqu'il incrémente les compteurs de gestion de pièces déterminées et surveille ces compteurs de gestion pour savoir si ces pièces atteignent la fin de leur durée de vie.

L'activation du moyen d'alarme 4 entraîne alors par exemple l'interdiction de vol du giravion jusqu'à ce que la pièce concernée soit remplacée,

Si le moyen d'alarme 4 est déclenché en vol, le pilote peut écourter son vol pour éviter d'être confronté à une panne. Toutefois, il est avantageux que le moyen d'alarme 4 soit activé avant que la durée de vie d'une pièce du turbomoteur soit atteinte.

Par conséquent, il est envisageable que le calculateur électronique 3 active le moyen d'alarme 4 par anticipation de manière à créer une marge suffisante pour permettre d'anticiper une opération de maintenance. Par exemple, en fonction du turbomoteur et du giravion, le seuil prédéterminé à partir duquel le calculateur électronique active le moyen d'alarme se situe 50 cycles avant la limite maximale d'un compteur de cycles, 5 heures avant la limite maximale du compteur de gestion comptabilisant le nombre d'heures de vol du turbomoteur et 2% avant la limite maximale du compteur d'endommagement. Toutefois, si le moyen d'alarme est activé pendant un vol, le pilote pourra tout de même terminer sa mission.

On note que l'ensemble liaison analogique 8/ moyen d'alarme 4 est fiable. Toutefois, pour maximiser la sécurité, le calculateur électronique 3 transmet aussi au système d'affichage, via les première 6 et deuxième 7 liaisons numériques, une information signalant qu'une action de maintenance doit être entreprise. Par conséquent, ce fait sera signalé à deux entités du dispositif de contrôle et de régulation, à savoir le système d'affichage 5 et le moyen d'alarme 4.

A l'aide de ce moyen d'alarme 4, un opérateur n'a donc pas besoin de consulter une pluralité de documents, comme le compte rendu de vol, pour savoir si une action de maintenance doit être faite sur le turbomoteur, le moyen d'alarme 4 et éventuellement le système d'affichage 5 lui indiquant quand cette action de maintenance doit intervenir.

La maintenance à réaliser étant parfaitement signalée par des moyens indépendants et redondés, les risques de pannes diminuent ce qui rend inutile l'utilisation de liaisons de secours et d'instruments de secours.

De même, le calculateur électronique 3 active le moyen d'alarme 4 quand le turbomoteur est utilisé de manière anormale.

En effet, une pluralité de régimes de fonctionnement sont définis pour le turbomoteur, chaque régime spécifiant des limites que les paramètres de surveillance du turbomoteur ne doivent pas dépasser. Usuellement, les paramètres de surveillance du turbomoteur sont la vitesse de rotation Ng du générateur de gaz du turbomoteur, le couple moteur Cm et la température d'éjection des gaz T45 à l'entrée de la turbine libre du turbomoteur.

Par exemple, le régime de décollage ne doit généralement pas être utilisé pendant plus de 5 minutes, le régime maximal en transitoire étant généralement utilisable pendant 20 secondes.

Si l'un des paramètres de surveillance du turbomoteur est compris entre sa limite maximale au régime maximal continu et sa limite maximale au régime de décollage alors le calculateur électronique 3 en déduit que le turbomoteur se trouve au régime de décollage.

Par suite, si cette situation dure plus de 5 minutes, soit une durée supérieure au temps maximal d'utilisation du régime de décollage, le calculateur électronique 3 active alors le moyen d'alarme 4.

De même, si l'un des paramètres de surveillance du turbomoteur est compris entre sa limite maximale au régime de décollage et sa limite maximale au régime maximal en transitoire alors le calculateur électronique 3 en déduit que le turbomoteur se trouve au régime maximal en transitoire. Par suite, si cette situation dure plus de 20 secondes, soit une durée supérieure au temps maximal d'utilisation du régime maximal en transitoire alors le calculateur électronique 3 active le moyen d'alarme 4.

Par conséquent, le calculateur électronique 3 active le moyen d'alarme 4 si un paramètre de surveillance du turbomoteur 1 est compris entre sa limite inférieure et sa limite supérieure pour un régime de fonctionnement donné du turbomoteur durant un temps supérieur au temps d'utilisation dudit régime de fonctionnement donné.

Le pilote sera ainsi informé que le turbomoteur est utilisé abusivement. Il pourra alors réduire la puissance du turbomoteur afin de ne pas endommager le turbomoteur ou la boîte de transmission principale.

Ces derniers fonctionneront donc correctement puisqu'ils seront utilisés dans les limites prescrites par le constructeur, Leur fiabilité ainsi obtenue rend alors inutile l'implémentation d'instruments de secours.

En outre, pour maximiser la sécurité, le calculateur électronique 3 transmet aussi au système d'affichage 5, via les première 6 et deuxième 7 liaisons numériques, une information signalant que le turbomoteur fonctionne à des niveaux supérieurs aux niveaux autorisés.

Par conséquent, ce fait sera signalé à deux entités du dispositif de contrôle et de régulation 9, à savoir le système d'affichage 5 et le moyen d'alarme 4.

Enfin, selon le procédé mis en oeuvre par le dispositif de contrôle et de régulation 9, le dispositif peut prévenir le pilote du giravion en cas de pannes « dormantes ».

En effet, suivant le problème qui l'affecte, le système d'affichage peut fonctionner tout en donnant des informations erronées au pilote. Le pilote peut alors croire que le turbomoteur est utilisé dans les limites autorisées alors qu'il le sollicite dans les faits à des puissances non autorisées

Cette panne dormante est particulièrement dangereuse car le pilote va se fier à des informations fausses sans pouvoir se douter de la présence d'une panne.

Par suite, au sol, durant une étape a) le calculateur électronique 3 simule l'activation d'un régime de fonctionnement du turbomoteur, le régime de décollage par exemple.

Durant une étape b), le calculateur électronique 3 simule une valeur d'un paramètre de surveillance, ladite valeur étant supérieure à une limite prédéterminée. Par exemple, le calculateur électronique 3 simule une valeur de la température d'éjection des gaz T45 supérieure à la limite maximale de cette température d'éjection des gaz T45 au régime de décollage.

Dans ce cas de figure, le calculateur électronique 3 doit envoyer une information au système d'affichage pour signaler le dépassement de la limite maximale de la température d'éjection des gaz T45. De même, il doit normalement activer le moyen d'alarme 4.

Par suite, au cours des étapes c) et d), un opérateur, le pilote par exemple, vérifie d'une part que le système d'affichage signale le dépassement de la limite maximale de la température d'éjection des gaz T45 et, d'autre part, que le moyen d'alarme est bien activé.

Si tel est le cas, alors, l'opérateur, ou le dispositif en automatique, peut en déduire que les informations signalées par le système d'affichage 5 et le moyen d'alarme 4 sont cohérentes et exactes. On en déduit donc qu'il n'y a pas de panne dormante.

Cette procédure de test permet de s'assurer que le dispositif de contrôle et de régulation fonctionne correctement. Ce point étant confirmé, il n'est pas Indispensable d'équiper le giravion avec d'autres équipements, tels que des instruments de secours.

Naturellement, la présente invention est sujette à de nombreuses variations quant à sa mise en oeuvre. Bien qu'un mode de réalisations ait été décrit, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, Il est envisageable d'intégrer le moyen d'alarme 4 dans le système d'affichage 5. Une partie du système obtenu comporte alors le système d'affichage 5 en tant que tel alors qu'une autre partie est équipée du moyen d'alarme 4.

Cette variante permet d'optimiser l'encombrement du dispositif dans le cockpit d'un giravion.

## Revendications

1. Dispositif de contrôle et de régulation (9) d'un turbomoteur (1) de giravion muni d'une part d'un calculateur électronique (3) de contrôle et de régulation qui reçoit des signaux relatifs à des paramètres de surveillance dudit turbomoteur (1), et, d'autre part, d'un moyen d'alarme (4) commandée par ledit calculateur électronique (3) via une liaison analogique (8) lorsqu'un événement susceptible de dégrader la sécurité du vol dudit giravion survient,
**caractérisé en ce que** ledit calculateur électronique (3) comporte au moins un compteur de gestion de composants à vie limitée du turbomoteur, ledit calculateur électronique étant apte à activer ledit moyen d'alarme (4) lorsqu'une action de maintenance doit être entreprise sur ledit turbomoteur (1) et lorsque ledit turbomoteur (1) est utilisé de façon anormale, à savoir en dehors des régimes d'utilisation prescrits.

2. Dispositif selon la revendication 1,
**caractérisé en ce que** ledit moyen d'alarme (4) est un moyen visuel agencé dans un cockpit dudit giravion.

3. Dispositif selon l'une quelconque des revendications précédentes,
**caractérisé en ce qu'**il comporte au moins un système d'affichage (5) qui reçoit de la part du calculateur électronique (3) des informations relatives auxdits paramètres de surveillance via une première et une deuxième liaisons numériques (6, 7).

4. Dispositif selon la revendication 3,
**caractérisé en ce que** ledit moyen d'alarme 4 est intégré dans ledit système d'affichage (5).

5. Procédé de contrôle et de régulation d'un turbomoteur (1) apte à être mis en oeuvre par un dispositif de contrôle et de régulation (9) d'un turbomoteur (1) de giravion muni d'un calculateur électronique (3) de contrôle et de régulation qui reçoit des signaux relatifs à des paramètres de surveillance dudit turbomoteur (1), ledit dispositif de contrôle et de régulation (9) comportant un moyen d'alarme (4), ledit moyen d'alarme (4) est commandé par ledit calculateur électronique (3) via une liaison analogique (8) lorsqu'un événement pouvant dégrader la sécurité du giravion survient,
**caractérisé en ce que** ledit calculateur électronique (3) comportant au moins un compteur de gestion de composants à vie limitée du turbomoteur (1), ledit calculateur électronique (3) active ledit moyen d'alarme (4) lorsque ledit compteur de gestion atteint un seuil prédéterminé et de plus lorsque ledit turbomoteur (1) est utilisé de façon anormale, à savoir en dehors des régimes d'utilisation prescrits.

6. Procédé selon la revendication 5,
**caractérisé en ce que** ledit dispositif (9) comportant au moins un système d'affichage (5) agencé dans un cockpit dudit giravion, ledit calculateur électronique (3) envoie un message au dit système d'affichage (5) via un bus numérique (6, 7) pour que ce système d'affichage (5) indique au pilote que ledit compteur de gestion a atteint ledit seuil prédéterminé.

7. Procédé selon la revendication 6,
**caractérisé en ce que** ledit dispositif (9) comportant au moins un système d'affichage (5) agencé dans un cockpit dudit giravion, ledit calculateur électronique (3) envoie un message au dit système d'affichage (5) via un bus numérique (6, 7) pour que ce système d'affichage (5) indique au pilote que ledit turbomoteur (1) est utilisé de façon anormale,

8. Procédé selon l'une quelconque des revendications 5 à 6,
**caractérisé en ce que**, au sol, on procède aux étapes suivantes lors de la mise sous tension dudit calculateur électronique (3) :
a) ledit calculateur électronique (3) simule l'activation d'un régime de fonctionnement du turbomoteur,
b) ledit calculateur électronique (3) simule une valeur d'un paramètre de surveillance (Ng, Cm, T45) dudit turbomoteur (1), ladite valeur étant supérieure à une limite prédéterminée,
c) on vérifie qu'un système d'affichage (5), agencé dans le cockpit et relié au calculateur électronique (3) par une liaison numérique (6, 7), signale que ladite valeur est supérieure à ladite limite, et
d) on vérifie que ledit moyen d'alarme (4) a été activé par ledit calculateur électronique.

9. Procédé selon la revendication 6,
**caractérisé en ce que**, ledit régime de fonctionnement est le régime de décollage (PMD) du turbomoteur (2).

## Claims

1. A device (9) for controlling and regulating a rotorcraft turbine engine (1) provided on one hand with a controlling and regulating electronic computer (3) which receives signals relating to monitoring parameters of said turbine engine (1), and, on the other hand, with an alarm means (4) controlled by said electronic computer (3) via an analogue link (8) when an event liable to diminish the safety of the flight of said rotorcraft occurs,
**characterised in that** said electronic computer (3) comprises at least one counter for managing components of limited life of the turbine engine, said electronic computer being capable of activating said alarm means (4) when a maintenance action has to be carried out on said turbine engine (1) and when said turbine engine (1) is being used in abnormal manner, namely outside the prescribed use modes.

2. A device according to Claim 1, **characterised in that** said alarm means (4) is a visual means arranged in a cockpit of said rotorcraft.

3. A device according to any one of the preceding claims, **characterised in that** it comprises at least one display system (5) which receives from the electronic computer (3) information relating to said monitoring parameters via a first and a second digital link (6, 7).

4. A device according to Claim 3, **characterised in that** said alarm means (4) is integrated in said display system (5).

5. A method for controlling and regulating a turbine engine (1) capable of being implemented by a device (9) for controlling and regulating a rotorcraft turbine engine (1) provided with a controlling and regulating electronic computer (3) which receives signals relating to monitoring parameters of said turbine engine (1), said controlling and regulating device (9) comprising an alarm means (4), said alarm means (4) is controlled by said electronic computer (3) via an analogue link (8) when an event liable to diminish the safety of said rotorcraft occurs,
**characterised in that**, said electronic computer (3) comprising at least one counter for managing components of limited life of the turbine engine (1), said electronic computer (3) activates said alarm means (4) when said management counter reaches a predetermined threshold and furthermore when said turbine engine (1) is being used in abnormal manner, namely outside the prescribed use modes.

6. A method according to Claim 5, **characterised in that**, said device (9) comprising at least one display system (5) arranged in a cockpit of said rotorcraft, said electronic computer (3) sends a message to said display system (5) via a digital bus (6, 7) so that this display system (5) indicates to the pilot that said managing counter has reached said predetermined threshold.

7. A method according to Claim 6, **characterised in that**, said device (9) comprising at least one display system (5) arranged in a cockpit of said rotorcraft, said electronic computer (3) sends a message to said display system (5) via a digital bus (6, 7) so that this display system (5) indicates to the pilot that said turbine engine (1) is being used in abnormal manner.

8. A method according to any one of Claims 5 to 6, **characterised in that**, on the ground, the following steps are carried out when said electronic computer (3) is switched on:
a) said electronic computer (3) simulates the activation of an operating mode of the turbine engine,
b) said electronic computer (3) simulates a value of a monitoring parameter (Ng, Cm, T45) of said turbine engine (1), said value being greater than a predetermined limit,
c) a check is made that a display system (5), arranged in the cockpit and connected to the electronic computer (3) by a digital link (6, 7), signals that said value is greater than said limit, and
d) a check is made that said alarm means (4) has been activated by said electronic computer.

9. A method according to Claim 6, **characterised in that** said operating mode is the takeoff rating (MTOP) of the turbine engine (2) [sic].

## Patentansprüche

1. Vorrichtung (9) zur Steuerung und Regelung eines Turbomotors (1) eines Drehflügelflugzeugs mit einerseits einem elektronischen Rechner (3) zur Steuerung und Regelung, der Signale bezüglich von Überwachungsparametern des Turbomotors (1) empfängt und andererseits mit einer Alarmvorrichtung (4), die von dem elektronischen Rechner (3) über eine analoge Verbindung (8) steuert, wenn ein Ereignis auftritt, welches die Sicherheit des Fluges beeinträchtigen kann,
**dadurch gekennzeichnet, dass** der elektronische Rechner (3) mindestens einen Rechner zur Verwaltung der Bestandteile des Turbomotors mit begrenzter Lebensdauer aufweist, wobei der elektronische Rechner die Alarmvorrichtung (4) aktivieren kann wenn eine Wartungsarbeit am Turbomotor (1) durchgeführt werden muss und wenn der Turbomotor (1) auf anormale Weise betrieben wird, das heißt außerhalb vorgeschriebener Benutzungsbereiche.

2. Vorrichtung nach Anspruch 1,
**dadurch gekennzeichnet, dass** die Alarmvorrichtung (4) eine visuelle Anzeigevorrichtung ist, die im Cockpit des Drehflügelflugzeugs eingebaut ist.

3. Vorrichtung nach einem der vorstehenden Ansprüche,
**gekennzeichnet durch** mindestens ein Anzeigesystem (5), welches vom elektronischen Rechner (3) Informationen bezüglich der Überwachungsparameter über eine erste und eine zweite digitale Verbindung (6, 7) empfängt.

4. Vorrichtung nach Anspruch 3,
**dadurch gekennzeichnet, dass** die Alarmvorrichtung (4) in das Anzeigesystem (5) integriert ist.

5. Verfahren zur Steuerung und Regelung eines Turbomotors (1), welches durchgeführt werden kann mit einer Vorrichtung zur Steuerung und Regelung (9) eines Turbomotors (1) eines Drehflügelflugzeugs, die mit einem elektronischen Rechner (3) zur Steuerung und Regelung ausgerüstet ist, die Signale bezüglich Überwachungsparametern des Turbomotors (1) empfängt, wobei die Vorrichtung zur Steuerung und Regelung (9) eine Alarmvorrichtung (4) aufweist, die von dem elektronischen Rechner (3) über eine analoge Verbindung (8) gesteuert wird, wenn ein Ereignis auftritt, welches die Sicherheit des Drehflügelflugzeugs beeinträchtigt,
**dadurch gekennzeichnet, dass** der elektronische Rechner (3) mindestens einen Rechner zur Verwaltung der Bestandteile des Turbomotor (1) mit begrenzter Lebensdauer aufweist, wobei der elektronische Rechner (3) die Alarmvorrichtung (4) aktiviert, wenn der Rechner zur Verwaltung eine vorbestimmte Schwelle erreicht und ferner wenn der Turbomotor (1) auf anormale Weise betrieben wird, das heißt außerhalb von vorgeschriebenen Betriebsbereichen.

6. Verfahren nach Anspruch 5,
**dadurch gekennzeichnet, dass** die Vorrichtung (9) mindestens ein Anzeigesystem (5) aufweist, welches in einem Cockpit des Drehflügelflugzeugs eingebaut ist, wobei der elektronische Rechner (3) eine Meldung an das Anzeigesystem (5) über einen Digitalbus (6, 7) sendet, damit das Anzeigesystem (5) dem Piloten anzeigt, dass der Verwaltungsrechner die vorbestimmte Schwelle erreicht hat.

7. Verfahren nach Anspruch 6,
**dadurch gekennzeichnet, dass** die Vorrichtung (9) mindestens ein Anzeigesystem (5) aufweist, welches in einem Cockpit des Drehflügelflugzeugs eingebaut ist, wobei der elektronische Rechner (3) eine Meldung an das Anzeigesystem (5) über einen Digitalbus (6, 7) übermittelt, damit das Anzeigesystem (5) dem Piloten anzeigt, dass der Turbomotor (1) auf anormale Weise betrieben wird.

8. Verfahren nach einem der Ansprüche 5 oder 6,
**dadurch gekennzeichnet, dass** am Boden während des Hochfahrens des elektronischen Rechner (3) folgende Schritte durchgeführt werden:
a) Der elektronische Rechner (3) simuliert die Aktivierung eines Betriebsbereichs des Turbomotors,
b) der elektronische Rechner (3) simuliert einen Wert eines Überwachungsparameters (Ng, Cm, T45) des Turbomotors (1), wobei der Wert größer ist als ein vorbestimmter Grenzwert,
c) es wird überprüft ob ein Anzeigesystem (5), welches im Cockpit eingebaut und mit dem elektronischen Rechner (3) über eine digitale Leitung (6, 7) verbunden ist anzeigt, dass der Wert größer als der besagte Grenzwert ist, und
d) es wird überprüft, ob die Alarmvorrichtung (4) von dem elektronischen Rechner (3) aktiviert worden ist.

9. Verfahren nach Anspruch 6,
**dadurch gekennzeichnet, dass** der Betriebsbereich der Bereich des Turbomotors (2) ist, der (PMD) entspricht.
